**Europäisches Patentamt**

(19) **European Patent Office**

**Office européen des brevets**

(11) Veröffentlichungsnummer: **0 165 532**

**B1**

(12) # EUROPÄISCHE PATENTSCHRIFT

(45) Veröffentlichungstag der Patentschrift:
27.04.88

(21) Anmeldenummer: **85107074.8**

(22) Anmeldetag: **07.06.85**

(51) Int. Cl.⁴: **F 17 D 1/04, F 17 B 1/12**

(54) **Reingasdurchströmzwischenspeicheranlage.**

(30) Priorität: **20.06.84 DE 3422885**

(43) Veröffentlichungstag der Anmeldung:
**27.12.85 Patentblatt 85/52**

(45) Bekanntmachung des Hinweises auf die Patenterteilung:
**27.04.88 Patentblatt 88/17**

(84) Benannte Vertragsstaaten:
**DE FR GB IT NL**

(56) Entgegenhaltungen:
**CH-A-407 920**
**DE-C-959 361**

(73) Patentinhaber: **Siemens Aktiengesellschaft Berlin und München, Wittelsbacherplatz 2, D-8000 München 2 (DE)**

(72) Erfinder: **Goebel, Konrad, Dipl.- Ing., Stettiner Strasse 5, D-8520 Erlangen (DE)**
Erfinder: **Schiffers, Ulrich, Dr. Dipl.- Ing., Moritzbergstrasse 1, D-8501 Eckental (DE)**

## Beschreibung

Die Erfindung bezieht sich auf eine Reingasdurchströmzwischenspeicheranlage zum Anschluß an eine Gasverteilungsleitung mit mindestens einem mit seiner Ausströmleitung an der Gasverteilungsleitung angeschlossenen Hochdruckspeicher, mindestens einem an der Gasverteilungsleitung angeschlossenen Niederdruckspeicher und mindestens einem Druckerhöhungsverdichter.

Bei einem Mittellastkraftwerk mit integrierter Kohlevergasungsanlage zur Erzeugung von Strom und Methanol DE-A-3 319 732.6) ist unter anderem bereits vorgeschlagen worden, zwischen der Kohlevergasungsanlage und der dieser nachgeschalteten Gasreinigungsanlage einerseits und den verschiedenen Verbrauchern für das erzeugte Reingas andererseits eine sogenannte Reingasdurchströmzwischenspeicheranlage einzuschalten, die bei einem Überangebot überschüssiges Reingas speichert und die bei einem unzureichenden Reingasangebot zusätzliches Reingas abgibt. Solche kurzfristig auftretende Über- oder Unterdeckungen des Reingasbedarfs können insbesondere dann auftreten, wenn die Gasturbine, zum Ausgleich steigenden Stromverbrauchs, kurzfristig hochgefahren oder bei sinkendem Stromverbrauch kurzfristig heruntergefahren werden muß, der Kohlevergaser aber diesen schwankenden Verbrauchsänderungen nicht folgen kann. Nun ist es eine Eigenart von Gasturbinenkraftwerken, daß sie sehr empfindlich auf Druckschwankungen in der Brenngasleitung reagieren. Auch bei diversen anderen Reingasverbrauchern, die beim Herunterfahren der Gasturbine zuschaltbar sind, werden ende Toleranzen bei der Einhaltung des Druckes in der Reingasversorgungsleitung gefordert.

Durch die DE-C-959 361 ist es bereits bei einer Gasversorgungsleitung bekannt, einen Puffer unmittelbar an die Versorgungsleitung anzuschließen und darüber hinaus überschüssiges Gas in Abhängigkeit vom Verbrauch unmittelbar aus der Versorgungsleitung in einen Hochdruckspeicher zu pumpen. Es ist eine Eigenart einer solchen Druckleitung, daß allein schon durch das Einschalten oder Ausschalten der Pumpen Druckänderungen erzeugt werden, die selbst ein Pufferspeicher nur unzulänglich dämpfen kann. Auch lassen Kompressoren nur die Betriebszustände "Ein" oder "Aus" zu, so daß Zwischenwerte nicht aufgefangen werden können. Schließlich verhindert die Trägheit von Kompressoren die Ausregelung kurzer Druckschwankungen.

Der Erfindung liegt daher die Aufgabe zugrunde, die Reingasdurchströmzwischenspeicheranlage so auszubilden, daß sie, den Druck in der Reingasleitung auch bei starken und plötzlichen Schwankungen des Angebots und vor allem des Verbrauchs an Reingas in engen Grenzen konstant halten. Zugleich soll die Reingasdurchströmzwischenspeicheranlage eine möglichst hohe Betriebszuverlässigkeit bei gleichzeitig möglichst geringen Investitionskosten gewährleisten.

Die gestellte Aufgabe wird erfindungsgemäß dadurch gelöst, daß die Einströmleitung in den Niederdruckspeicher an der Gasverteilungsleitung angeschlossen ist, in einer den Niederdruckspeicher mit dem Hochdruckspeicher verbindenden Verbindungsleitung mindestens ein Druckerhöhungsverdichter eingesetzt ist der Arbeitsdruck des Niederdruckspeichers stets unter dem Mindestdruck und der Arbeitsdruck des Hochdruckspeichers stets über dem maximalen Druck in der Gasverteilungsleitung gehalten werden und über Druckfühler steuerbare Ventile in den Einström-und Ausströmleitungen der Niederdruck- und der Hochdruckspeicher eingebaut sind. Hierdurch läßt sich der Druck in der Gasverteilungsleitung vollautomatisch innerhalb einer vorgesehenen Bandbreite konstant halten. Außerdem läßt eine solche Anlage eine besonders trägheitsarme Aufnahme überschüssiger Reingasmengen zu. In diesem Fall brauchen zur Druckregelung bloß Ventile geöffnet nicht aber erst Pumpen zum Anlaufen gebracht werden.

Sowohl die Speicherkapazität als auch die maximalen bzw. minimalen Speicherdrücke lassen sich erhöhen, wenn jedem Druckerhöhungsverdichter zur Verminderung der Speichertemperatur ein Wärmetauscher nachgeschaltet ist. Gleiches gilt auch für den Einbau von Wärmetauschern in den Niederdruckspeichern und in deren Einströmleitungen.

Die Aufnahmekapazität der Reingasdurchströmzwischenspeicheranlage je Zeiteinheit läßt sich vergrößern, wenn dem Hochdruckspeicher eine diesen direkt mit der Gasverteilungsleitung verbindende mit mindestens einem Druckerhöhungsverdichter versehene Hochdruckbypasseinströmleitung zugeordnet ist. Außerdem läßt sich bei der direkten Einspeisung in den Hochdruckspeicher Pumpleistung einsparen, weil ausgehend vom Druckniveau der Gasverteilungsleitung und nicht vom tieferen Druckniveau der Niederdruckspeicher aus verdichtet werden muß. Alternativ läßt sich aber auch eine mit der Gasverteilungsleitung verbundene Niederdruckbypasseinströmleitung vorsehen, die die Niederdruckseite der Verbindungsleitung vor dem ersten Druckerhöhungsverdichter unmittelbar mit der Gasverteilungsleitung verbindet. Große Druckunterschiede zwischen den Hochdruck-und Niederdruckspeichern lassen sich durch die Serienschaltung mehrerer Druckerhöhungsverdichter in der Verbindungsleitung überbrücken.

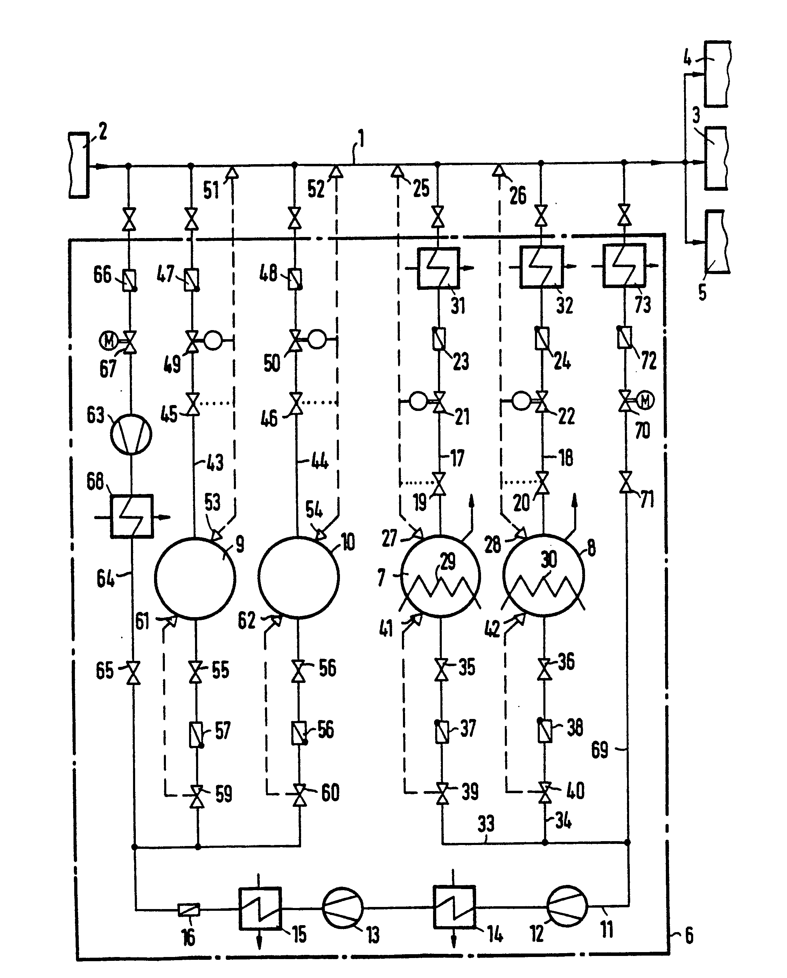

Weitere Einzelheiten der Erfindung werden anhand eines in der Figur dargestellten Ausführungsbeispiels erläutert. Es zeigt:

Die Figur eine schematische Darstellung des Aufbaus der Reingasdurchströmzwischenspeicheranlage mit zwei parallel geschalteten Niederdruckspeichern und zwei parallel geschalteten Hochdruckspeichern.

In der schematischen Darstellung der Figur erkennt man die Gasverteilungsleitung 1, über die das in einem hier nicht dargestellten Kohlevergaser erzeugte und in einer nachgeschalteten Gasreinigung 2 gereinigte sogenannte Reingas der Brennkammer 3 einer Gasturbine und weiteren Verbrauchern 4, 5, wie beispielsweise eine Methanolsyntheseanlage zuleitbar ist. Die an diese Gasverteilungsleitung 1 angeschlossene Reingasdurchströmzwischenspeicheranlage 6 besitzt im Ausführungsbeispiel zwei Niederdruckspeicher 7, 8 und zwei Hochdruckspeicher 9, 10. Während die beiden Niederdruckspeicher 7, 8 einerseits und die beiden Hochdruckspeicher 9, 10 andererseits parallel zueinander geschaltet sind, sind die Niederdruckspeicher und die Hochdruckspeicher über eine gemeinsame Verbindungsleitung 11 in Serie geschaltet. Diese Verbindungsleitung ist im Ausführungsbeispiel mit zwei in Serie geschalteten Zwischenverdichtern 12, 13 ausgerüstet. Jedem der Zwischenverdichter ist ein Zwischenkühler 14, 15 unmittelbar nachgeschaltet. Außerdem ist in der Verbindungsleitung 11 eine Rückschlagklappe 16 eingebaut.

Jeder der beiden Niederdruckspeicher 7, 8 ist über eine separate Einströmleitung 17, 18 an der Gasverteilungsleitung 1 angeschlossen. In diese Einströmleitung ist sowohl ein Absperrventil 19, 20, ein Einströmregelventil 21, 22 , als auch eine Rückschlagklappe 23, 24 eingebaut. Beide Einströmregelventile sind an je einen in der Gasverteilungsleitung eingebauten Druckfühler 25, 26 angeschlossen, an denen der maximal in der Gasverteilungsleitung zulässige Druck einstellbar ist. Außerdem sind diese Einströmregelventile 21, 22 oder alternativ auch eines der in der jeweiligen Einströmleitung 17, 18 eingesetzten Absperrventile 19, 20 über einen weiteren am Niederdruckspeicher 7, 8 angeschlossenen Druckfühler 27, 28, der auf den maximalen im Niederdruckspeicher 7, 8 zulässigen Druck einstellbar ist, angeschlossen. In den Niederdruckspeichern ist zur Begrenzung der Speichertemperatur je ein Kühler 29, 30 eingebaut. Schließlich kann in den Einströmleitungen 17, 18 zu den Niederdruckspeichern 7, 8 mindestens ein Hilfskühler 31, 32 zur Vorkühlung des einströmenden Reingases vorgesehen sein.

In den Ausströmleitungen 33, 34 der Niederdruckspeicher 7, 8 zur Verbindungsleitung 11 hin ist außer einer Absperrarmatur 35, 36 und einer Rückschlagklappe 37, 38 noch ein Niederdruck-Ausströmschließventil 39, 40 vorgesehen, das über einen am Niederdruckspeicher angeschlossenen, auf den maximalen im Niederdruckspeicher 7, 8 zulässigen Druck einstellbaren Druckfühler 41, 42 steuerbar ist.

Die Ausströmleitungen 43, 44 jeder der beiden Hochdruckspeicher 9, 10 beinhalten außer einer Absperrarmatur 45, 46 und einer Rückschlagklappe 47, 48 je ein sogenanntes Hochdruckausströmregelventil 49, 59. Diese sind über je einen an der Gasverteilungsleitung 1 angeschlossenen, auf den minimalen in der Gasverteilungsleitung zulässigen Druck einstellbaren Druckfühler 51, 52 steuerbar. Die Hochdruckausströmregelventile 49, 50 oder alternativ je eines der in den beiden Ausströmleitungen 43, 44 der Hochdruckspeicher 9, 10 eingebauten Absperrarmaturen 45, 46 sind außerdem über je ein an dem zugeordneten Hochdruckspeicher angeschlossen, auf den minimalen, im Hochdruckspeicher zulässigen Druck einstellbaren Druckfühler 53, 54 steuerbar. An die Verbindungsleitung 11 sind die Hochdruckspeicher 9, 10 außer über eine Absperrarmatur 55, 56 und eine Rückschlagklappe 57, 58 über je ein Einströmschließventil 59, 60 angeschlossen. Jedes der Einströmschließventile 59, 60 ist über ein am Hochdruckspeicher 9, 10 angeschlossenen, auf dessen Maximaldruck einstellbaren Druckfühler 61, 62 steuerbar.

Parallel zu den beiden Hochdruckspeichern 9, 10 ist im Ausführungsbeispiel eine mit einem einzigen Druckerhöhungsverdichter 63 versehene Hochdruckbypasseinströmleitung 64 geschaltet, die außer über eine Absperrarmatur 65 und eine Rückschlagklappe 66 noch mit einem Motorregelventil 67 versehen ist. Dem Druckerhöhungsverdichter 63 in der Hochdruckbypasseinströmleitung 64 ist ein Wärmetauscher 68 nachgeschaltet. Im Ausführungsbeispiel ist auch eine, alternativ zur Hochdruckbypasseinströmleitung 64 verwendbare Niederdruckbypasseinströmleitung 69 eingezeichnet. Diese verbindet die Gasverteilungsleitung 1 mit der Niederdruckseite der Verbindungsleitung 11. In diese Niederdruckbypasseinströmleitung 69 ist ein Motorregelventil 70 in Serie zu einer Absperrarmatur 71 und eine Rückschlagklappe 72 geschaltet. Im Ausführungsbeispiel ist auch hier ein Hilfskühler 73 für die Abkühlung des Reingases eingesetzt.

Steigt infolge verminderter Reingasabnahme, beispielsweise durch Herunterfahren der Leistung der Gasturbine, der Druck in der Gasverteilungsleitung 1, so steuern die in der Gasverteilungsleitung eingebauten Druckfühler 25, 26 bei Überschreiten eines voreingestellten maximalen Druckes, die Einströmregelventile 21, 22 in den Einströmleitungen 17, 18 zu den Niederdruckspeichern 7, 8 an. Die Einströmregelventile 21, 22 sind jedoch über eine Auswahlschaltung (nicht dargestellt) so gegeneinander verriegelt, daß jeweils nur eines über den zugehörigen Druckfühler aufgesteuert werden kann, das oder die jeweils anderen Einströmregelventile aber solange geschlossen bleiben. Nun strömt das überschüssige Reingas durch die aufgesteuerte Einströmleitung und den in der Einströmleitung vorgesehenen Hilfskühler in den zugehörigen Niederdruckspeicher. Hierbei ist von Bedeutung, daß der Druck im Niederdruckspeicher ständig unter einem Wert liegt, der unter dem Mindestdruck in der Gasverteilungsleitung liegt. Der Niederdruckspeicher 7 oder 8 nimmt nunmehr das überschüssige Reingas entsprechend der vom Druckfühler 25, 26 gesteuerten Stellung des Einströmregelventils 21 oder 22 auf, so daß der Mindestdruck in der Gasverteilungsleitung 1 eingehalten wird. Erreicht der Niederdruckspeicher auf diese Weise seinen höchstzulässigen Druck, so steuert der am Niederdruckspeicher 7, 8 angebrachte Druckfühler 27, 28 das Einströmregelventil 21, 22 zu und steuert über die Auswahlschaltung das nächste Einströmregelventil an. Dieses wird nun seinerseits über seinen zugehörigen Druckfühler 25 oder 26 entsprechend des Gasangebots bzw. Gasdrucks in der Gasverteilungsleitung 1 aufgesteuert. Im Ausführungsbeispiel ist die Steuerleitung für den Druckfühler 27, 28 des Niederdruckspeichers 7, 8 jeweils an das Einströmregelventil 21, 22 angeschlossen worden. Es wäre jedoch auch möglich, mit dem Druckfühler am Niederdruckspeicher statt des Einströmregelventils das hierzu in Serie geschaltete Absperrventil 19, 20 zu steuern.

Sobald einer der Niederdruckspeicher 7, 8 seinen voreingestellten maximalen Druck erreicht hat und von der Gasverteilungsleitung 1 abgesperrt worden ist, wird über eine Schaltlogik und einen weiteren am Niederdruckspeicher angeschlossenen Druckfühler 41, 42 das Niederdruckausströmschließventil 39, 40 aufgesteuert, werden die Zwischenverdichter 12, 13 in der Verbindungsleitung eingeschaltet und wird eines der Einströmschließventile 59, 60 eines der Hochdruckspeicher aufgesteuert. Auf diese Weise wird der aufgefüllte Niederdruckspeicher erneut leergepumpt und einer der Hochdruckspeicher mit dem abgepumpten Reingas aufgeladen.

Jeder der Hochdruckspeicher 9, 10 ist mit einem Druckfühler 61, 62 für den maximal zulässigen Druck versehen. Über diese Druckfühler 61, 62 wird das zugehörige Einströmschließventil 59, 60 zur Verbindungsleitung 11 wieder geschlossen und das nächste Einströmschließventil geöffnet wenn der Hochdruckspeicher seinen höchstzulässigen Druck erreicht hat.

Sinkt der Gasdruck in der Gasverteilungsleitung 1 unter einen minimalen Wert, so werden die Hochdruckausströmregelventile 49, 50 über die Druckfühler 51, 52 in dem Maße aufgesteuert, wie dies zur Einhaltung des voreingestellten Mindestdruckes in der Gasverteilungsleitung erforderlich ist.

Zur Vermeidung von die Regelgenauigkeit beeinträchtigenden instabilen Zustände wird gleichzeitig jeweils nur einer der untereinander parallel geschalteten Hochdruckspeicher 9, 10 entleert. Ist der Druck in diesem Hochdruckspeicher unter einen einstellbaren Mindestdruck abgesunken, so wird über einen an diesem Hochdruckspeicher angeschlossenen Druckfühler 53, 54 entweder das zugehörige Hochdruckausströmregelventil 49, 50 oder eine in der gleichen Ausströmleitung liegende Absperrarmatur 45, 46 geschlossen. Über eine hier nicht weiter dargestellte Schaltlogik wird gleichzeitig das Hochdruckausströmregelventil bzw. die Absperrarmatur des nächsten noch gefüllten Hochdruckspeichers an- bzw. aufgesteuert. Die Stellung der Hochdruckausströmregelventile wird durch den zugehörigen Druckfühler 51, 52 bestimmt. Die weitere Einspeisung von Reingas in die Gasverteilungsleitung 1 übernimmt so der jeweils andere Hochdruckspeicher. Über eine entsprechende Verriegelung der einzelnen Ventile ist sichergestellt, daß ein Hochdruckspeicher nicht gleichzeitig über die Zwischenverdichter 12, 13 aufgefüllt und Reingas an die Gasverteilungsleitung 1 abgeben kann. Deshalb ist bei geöffneter Absperrarmatur 45, 46 und bei in der gleichen Ausströmleitung 43, 44 geöffnetem Hochdruckausströmungsregelventil 49, 50 über die zugehörige Ansteuerungslogik (nicht dargestellt) stets gleichzeitig das Einstromschließventil 59, 60 desselben Hochdruckspeichers geschlossen.

In analoger Weise sind auch die Ventile beidseitig der Niederdruckspeicher 7, 8 gegeneinander verriegelt, so daß kein Niederdruckspeicher über die in der Verbindungsleitung eingebauten Zwischenverdichter 12, 13 entleert werden kann, wenn gleichzeitig Reingas aus der Gasverteilungsleitung 1 über eine Einströmleitung 17, 18 in einen dieser Niederdruckspeicher einströmt. Daher wird beim Öffnen eines Einströmregelventils zugleich das Niederdruckausströmschließventil desselben Niederdruckspeichers über eine Ansteuerungslogik geschlossen. Auch hier kann alternativ das Absperrventil 19, 20 gegensinnig zum Niederdruckausströmschließventil 39, 40 gesteuert werden. Durch diese gegenseitige Verriegelung der Einström- und Ausströmleitungen eines jeden Niederdruckspeichers einerseits und der Einström- und der Ausströmleitungen der einander parallel geschalteten Speicher werden die Regelgenauigkeit der Einström-Regelventile 21, 22 beeinträchtigende instabile Zustände vermieden.

Zum Ausgleich eines größeren Gasüberschusses in der Gasverteilungsleitung 1 kann bei dieser Reingasdurchströmzwischenspeicheranlage 6 die Hochdruckbypasseinströmleitung 64 in Betrieb genommen werden, indem von einer Warte aus das zugehörige Motorregelventil 67 geöffnet und der Druckerhöhungsverdichter 63 in Betrieb genommen wird.

Hierdurch lassen sich größere Gasüberschußmengen direkt in einen der Hochdruckspeicher 9, 10 einspeisen. Diese Gasaufnahme über die Hochdruckbypasseinströmleitung kann alternativ oder auch additiv zur Gasaufnahme über einen der Niederdruckspeicher erfolgen. Alternativ zu dieser Lösung ist es auch möglich, größere Gasüberschußmengen dadurch aufzufangen, daß, wie im Ausführungsbeispiel dargestellt ist, eine Niederdruckbypasseinströmleitung 69 vorgesehen wird. Durch Aufsteuern des dort eingebauten Motorregelventils 70 können bei entsprechender Auslegung der Pumpleistung der Zwischenverdichter 12, 13 zusätzliche Gasmengen über die Verbindungsleitung 11 in einen der Hochdruckspeicher 9, 10 gepumpt werden. Bei der Aufnahme größerer Gasüberschußmengen ist die Inbetriebnahme der Hochdruckbypasseinströmleitung 64 bzw. der Niederdruckbypasseinströmleitung 69 ökonomischer, weil vom höheren Druckniveau der Gasverteilungsleitung aus und nicht vom niederen Druckniveau eines der Niederdruckspeicher 7, 8 aus verdichtet werden muß.

Aus regelungstechnischen Gründen werden beim Öffnen der Motorregelventile 67, 70 zugleich stets auch die Absperrventile 19, 20 in den Einströmleitungen 17, 18 der Niederdruckspeicher geschlossen. Durch die Nachschaltung von Zwischenkühlern 14, 15 hinter die einzelnen Verdichter 12, 13 und die Vorschaltung von Hilfskühlern 31, 32, 33 in den Einströmleitungen 17, 18, 69 kann die Gastemperatur in den einzelnen Speichern 7 bis 10 auf maximal zulässige Werte begrenzt werden. Hierdurch läßt sich die Speicherkapazität in diesen Speichern erhöhen. Die in den Niederdruckspeichern eingebauten Kühler erlauben es, dieselben auf einem vorgegebene Temperaturniveau zu halten.

**Bezugszeichenliste**

| | |
|---|---|
| Gasverteilungsleitung | 1 |
| Gasreinigung | 2 |
| Brennkammer | 3 |
| Verbraucher | 4, 5 |
| Reingasdurchströmzwischen-speicheranlage | 6 |
| Niederdruckspeicher | 7, 8 |
| Hochdruckspeicher | 9, 10 |
| Verbindungsleitung | 11 |
| Zwischenverdichter | 12, 13 |
| Zwischenkühler | 14, 15 |
| Rückschlagklappe | 16 |
| Einströmleitung | 17, 18 |
| Absperrventil | 19, 20 |
| Einströmregelventil | 21, 22 |
| Rückschlagklappe | 23, 24 |
| Druckfühler | 25, 26, 27, 28 |
| Kühler | 29, 30 |
| Hilfskühler | 31, 32 |
| Ausströmleitung | 33, 34 |
| Absperrarmatur | 35, 36 |
| Rückschlagklappe | 37, 38 |
| Niederdruck-Ausströmschließ-ventil | 39, 40 |
| Druckfühler | 41, 42 |
| Ausströmleitung | 43, 44 |
| Absperrarmatur | 45, 46 |
| Rückschlagklappe | 47, 48 |
| Hochdruckausströmregelventil | 49, 50 |
| Druckfühler | 51, 52, 53, 54 |
| Absperrarmatur | 55, 56 |
| Rückschlagklappe | 57, 58 |
| Einströmschließventil | 59, 60 |
| Druckfühler | 61, 62 |
| Druckerhöhungsverdichter | 63 |
| Hochdruckbypasseinström-leitung | 64 |
| Absperrarmatur | 65 |
| Rückschlagklappe | 66 |
| Motorregelventil | 67 |
| Wärmetauscher | 68 |
| Niederdruckbypasseinström-leitung | 69 |
| Motorregelventil | 70 |
| Absperrarmatur | 71 |
| Rückschlagklappe | 72 |
| Hilfskühler | |

**Patentansprüche**

1. Reingasdurchströmzwischenspeicheranlage zum (6) Anschluß an eine Gasverteilungsleitung (1) mit mindestens einem mit seiner Ausströmleitung (43, 44) an der Gasverteilungsleitung angeschlossenen Hochdruckspeicher, (9, 10) mindestens einem an der Gasverteilungsleitung angeschlossenen Niederdruckspeicher (7, 8) und mindestens einem Druckerhöhungsverdichter, (12, 13, 63,) <u>dadurch gekennzeichnet,</u>

daß die Einströmleitung (17, 18) in den Niederdruckspeicher (7, 8) an der Gasverteilungsleitung (1) angeschlossen ist, in einer den Niederdruckspeicher mit dem Hochdruckspeicher verbindenden Verbindungsleitung (11) mindestens ein Druckerhöhungsverdichter eingesetzt ist, der Arbeitsbereich des Niederdruckspeichers (7, 8) unter dem minimalen Druck und der Arbeitsbereich des Hochdruckspeichers (9, 10) über dem maximalen Druck der Gasverteilungsleitung (1) liegt und über Druckfühler (25, 26, 27, 28, 41, 42, 51, 52, 53, 54, 61, 62) steuerbare Ventile (19, 20, 21, 22, 39, 40, 45, 46, 49, 50, 59, 60) in den Einström- und Ausströmleitungen der Niederdruck- und der Hochdruckspeicher eingebaut sind.

2. Reingasdurchströmzwischenspeicheranlage nach Anspruch 1,
   dadurch gekennzeichnet, daß der Druckfühler (25, 26) für das Einströmventil (21, 22) des Niederdruckspeichers (7, 8) an der Gasverteilungsleitung (1) angeschlossen ist.

3. Reingasdurchströmzwischenspeicheranlage nach Anspruch 2,
   dadurch gekennzeichnet,
   daß das Einströmventil (21, 22) des Niederdruckspeichers (7, 8) als Regelventil ausgebildet ist.

4. Reingasdurchströmzwischenspeicheranlage nach Anspruch 2,
   dadurch gekennzeichnet,
   daß der Druckfühler (25, 26) das Einströmventil (21, 22) des Niederdruckspeichers (7, 8) bei Drücken oberhalb eines vorgegebenen maximalen Druckes in der Gasverteilungsleitung (1) öffnet.

5. Reingasdurchströmzwischenspeicheranlage nach Anspruch 1,
   dadurch gekennzeichnet,
   daß der Druckfühler (51, 52) für das Ausströmventil (49, 50) des Hochdruckspeichers (9, 10) an der Gasverteilungsleitung (1) angeschlossen ist.

6. Reingasdurchströmzwischenspeicheranlage nach Anspruch 5,
   dadurch gekennzeichnet,
   daß das Ausströmventil (49, 50) des Hochdruckspeichers (9, 10) als Regelventil ausgebildet ist.

7. Reingasdurchströmzwischenspeicheranlage nach Anspruch 5,
   dadurch gekennzeichnet,
   daß der Druckfühler (51, 52) das Ausströmventil (49, 50) des Hochdruckspeichers (9, 10) bei Drücken unterhalb eines vorgegebenen minimalen Druckes in der Gasverteilungsleitung (1) öffnet.

8. Reingasdurchströmzwischenspeicheranlage nach Anspruch 1,
   dadurch gekennzeichnet, daß dem Hochdruckspeicher (9, 10) eine diesen direkt mit der Gasverteilungsleitung (1) verbindende mit mindestens einem Druckerhöhungsverdichter (63) versehene Hochdruckbypass-Einströmleitung (64) zugeordnet ist.

9. Reingasdurchströmzwischenspeicheranlage nach Anspruch 1,
   dadurch gekennzeichnet,
   daß eine mit der Gasverteilungsleitung (1) verbundene Niederdruckbypass-Einströmleitung (69) unmittelbar in die Verbindungsleitung (11), auf deren Niederdruckseite vor dem ersten Druckerhöhungsverdichter (12) mündet.

10. Reingasdurchströmzwischenspeicheranlage nach Anspruch 8 oder 9,
   dadurch gekennzeichnet, daß die Bypassleitung (64, 69) mit einem fernsteuerbaren Regelventil (67, 70) ausgerüstet ist.

11. Reingasdurchströmzwischenspeicheranlage nach Anspruch 1,
   dadurch gekennzeichnet,
   daß in der Verbindungsleitung (11) mehrere Druckerhöhungsverdichter (12, 13) in Serie geschaltet sind.

12. Reingasdurchströmzwischenspeicheranlage nach Anspruch 8 und 11,
   dadurch gekennzeichnet.
   daß jedem Druckerhöhungsverdichter (12, 13, 63)
   zur Verminderung der Speichertemperatur ein Wärmetauscher (14, 15, 68) nachgeschaltet ist.

13. Reingasdurchströmzwischenspeicheranlage nach Anspruch 1,
   dadurch gekennzeichnet,
   daß ein Wärmetauscher (31, 32) zur Verminderung der Speichertemperatur in der von der Gasverteilungsleitung (1) in den Niederdruckspeicher (7, 8) führenden Einströmleitung (17, 18) eingeschaltet ist.

14. Reingasdurchströmzwischenspeicheranlage nach Anspruch 1,
   dadurch gekennzeichnet,
   daß ein Wärmetauscher (29, 30) zur Verminderung der Speichertemperatur im Niederdruckspeicher (7, 8) eingebaut ist.

15. Reingasdurchströmzwischenspeicheranlage nach Anspruch 1, 8 und 9,
   dadurch gekennzeichnet,
   daß in den Bypass- und Einströmleitungen Wärmetauscher (68, 73) eingeschaltet sind.

16. Reingasdurchströmzwischenspeicheranlage nach Anspruch 10,
   dadurch gekennzeichnet, daß das Regelventil (70) in der Niederdruckeinströmbypassleitung (69) gegen je eines der Einströmventile in den Einströmleitungen (17, 18) zu den Niederdruckspeichern (7, 8) verriegelt ist.

## Claims

1. Plant for intermediate storage of the pure gas flow (6) for connection to a gas distribution line (1) with at least one high pressure reservoir (9, 10) with its outflow line (43, 44) connected to the gas distribution line, with at least one low pressure reservoir (7, 8) connected to the gas distribution (with at least one low pressure reservair (7, 8) connected to the gas distribution line,) and at least one compressor for increasing pressure (12, 13, 63),

characterized in that,

the inflow line (17, 18) into the low pressure reservoir (7, 8) is connected to the gas distribution line (1), and that in a linking line (11) - linking the low pressure reservoir with the high pressure reservoir - at least one compressor for increasing pressure is inset, the working range of the low pressure reservoir (7, 8) lying below the minimum pressure and the working range of the high pressure reservoir (9, 10) lying above the minimum pressure of the gas distribution line (1), and valves (19, 20, 21, 22, 39, 40, 45, 46, 49, 50, 59, 60) - controllable via pressure transducers (25, 26, 27, 28, 41, 42, 51, 52, 53, 54, 61, 62), are built into the inflow and outflow lines of the low pressure and high pressure reservoirs.

2. Plant for intermediate storage of the pure gas flow, according to claim 1, characterized in that, the pressure transducer (25, 26) for the inflow valve (21, 22) of the low pressure reservoir (7, 8) is connected to the gas distribution line (1).

3. Plant for intermediate storage of the pure gas flow, according to claim 2, characterized in that, the inflow valve (21, 22) of the low pressure reservoir (7, 8) is formed as a regulating valve.

4. Plant for intermediate storage of the pure gas flow, according to claim 2, characterized in that, the pressure transducer (25, 26) opens the inflow valve (21, 22) of the low pressure reservoir (7, 8), in the case of pressures above a pre-given maximum pressure in the gas distribution line (1).

5. Plant for intermediate storage of the pure gas flow, according to claim 1, characterized in that, the pressure transducer (51, 52) for the outflow valve (49, 50) of the high pressure reservoir (9, 10) is connected to the gas distribution line (1).

6. Plant for intermediate storage of the pure gas flow, according to claim 5, characterized in that, the outflow valve (49, 50) of the high pressure reservoir (9, 10) is formed as a regulating valve.

7. Plant for intermediate storage of the pure gas flow, according to claim 5, characterized in that, the pressure transducer (51, 52) opens the outflow valve (49, 50) of the high pressure reservoir (9, 10), in the case of pressures below a pre-given minimum pressure in the gas distribution line (1).

8. Plant for intermediate storage of the pure gas flow according to claim 1, characterized in that, the high pressure reservoir (9, 10) is allocated a high pressure by-pass inflow line (64) - linking it directly with the gas distribution line (1), provided with at least one compressor for increasing pressure (63).

9. Plant for intermediate storage of the pure gas flow, according to claim 1, characterized in that, a low pressure by-pass inflow line (69) - linked with the gas distribution line (1) - opens directly into the linking line (11) on its low pressure side, before the first compressor for increasing pressure (12).

10. Plant for intermediate storage of the pure gas flow according to claim 8 or 9, characterized in that, the by-pass line (64, 69) is equipped with a remotely controllable regulating valve (67, 70).

11. Plant for intermediate storage of the pure gas flow, according to claim 1, characterized in that, in the linking line (11) several compressors for increasing pressure (12, 13) are connected in series.

12. Plant for intermediate storage of the pure gas flow, according to claim 8 and 11, characterized in that, a heat exchanger (14, 15, 68), for reducing the storage temperature is connected downstream to each compressor for increasing pressure (12, 13, 63).

13. Plant for intermediate storage of the pure gas flow, according to claim 1, characterized in that, a heat exchanger (31, 32) for reducing the storage temperature is connected into the inflow line (17, 18) - leading from the gas distribution line (1) into the low pressure reservoir (7, 8).

14. Plant for intermediate storage of the pure gas flow, according to claim 1, characterized in that, a heat exchanger (29, 30) for reducing the storage temperature is built into the low pressure reservoir (7, 8).

15. Plant for intermediate storage of the pure gas flow according to claim 1, 8 and 9, characterized in that, heat exchangers (68, 73) are connected into the by-pass and inflow lines.

16. Plant for intermediate storage of the pure gas flow, according to claim 10, characterized in that, the regulating valve (70) in the low pressure inflow by-pass line (69) is locked against each one of the inflow valves in the inflow lines (17, 18) to the low pressure reservoirs (7, 8).

## Revendications

1. Installation de stockage à réservoirs accumulateurs de gaz pur à passage en transit, destinge à communiquer avec un conduit répartiteur du gaz (1) et comportant au moins un réservoir accumulateur de haute pression (9, 10) communiquant par son conduit d'évacuation (43, 44) avec le conduit répartiteur du gaz, au moins un réservoir accumulateur de basse pression (7, 8) relié au conduit répartiteur du gaz (au moins un réservoir accumulateur de basse pression (7, 8) relié au conduit repartiteuer du gaz) et au moins un compresseur (12, 13, 63) augmentant la pression, caractérisé en ce que le conduit d'entrée (17, 18) du réservoir accumulateur basse pression (7, 8) communique avec le conduit répartiteur du gaz (1), dans un conduit de liaison (11) mettant le réservoir accumulateur basse pression en communication avec le réservoir accumulateur haute pression est monté au moins un compresseur augmentant la pression, la plage de fonctionnement du réservoir accumulateur basse pression (7, 8) est inférieure à la pression minimale et la plage de fonctionnement du réservoir accumulateur haute pression (9, 10) est supérieure à la pression maximale qui règne dans le conduit répartiteur du gaz (1) et des vannes (19, 20, 21, 22, 39, 40, 45, 46, 49, 50, 59, 60) commandées par des capteurs de pression (25, 26, 27, 28, 41, 42, 51, 52, 53, 54, 61, 62), sont montées dans les conduits d'admission et d'évacuation basse pression et haute pression.

2. Installation de stockage à réservoirs accumulateurs de gaz pur à passage en transit suivant la revendication 1,
    caractérisée en ce que
    le détecteur de pression (25, 26) pour la vanne d'admission (21, 22) du réservoir accumulateur basse pression (7, 8) communique avec le conduit répartiteur du gaz (1).

3. Installation de stockage à réservoirs accumulateurs de gaz pur à passage en transit suivant la revendication 2,
    caractérisée en ce que
    la vanne d'admission (21, 22) du réservoir accumulateur basse pression (7, 8) est constituée en vanne de régulation.

4. Installation de stockage à réservoirs accumulateurs de gaz pur à passage en transit suivant la revendication 2,
    caractérisée en ce que
    le capteur de pression (25, 26) ouvre la vanne d'admission (21, 22) du réservoir accumulateur basse pression (7, 8) pour des pressions supérieures à une pression maximale prescrite dans le conduit répartiteur du gaz (1).

5. Installation de stockage à réservoirs accumulateurs de gaz pur à passage en transit suivant la revendication 1,
    caractérisée en ce que
    le capteur de pression (51, 52) pour la vanne d'évacuation (49, 50) du réservoir accumulateur haute pression (9, 10) communique avec le conduit répartiteur du gaz (1).

6. Installation de stockage à réservoirs accumulateurs de gaz pur à passage en transit suivant la revendication 5,
    caractérisé en ce que
    la vanne d'évacuation (49, 50) du réservoir accumulateur haute pression (9, 10) est constituée en vanne de régulation.

7. Installation de stockage à réservoirs accumulateurs de gaz pur à passage en transit suivant la revendication 5,
    caractérisée en ce que
    le capteur de pression (51, 52) ouvre la vanne d'évacuation (49, 50) du réservoir accumulateur haute pression (9, 10) pour des pressions inférieures à une pression minimale prescrite dans le conduit répartiteur du gaz (1).

8. Installation de stockage à réservoirs accumulateurs de gaz pur à passage en transit suivant la revendication 1,
    caractérisée en ce que
    au réservoir accumulateur haute pression (9, 10) est associé un conduit d'admission en dérivation et sous haute pression (64) le mettant directement en communication avec le conduit répartiteur du gaz (1) et muni d'au moins un compresseur augmentant la pression (63).

9. Installation de stockage à réservoirs accumulateurs de gaz pur à passage en transit suivant la revendication 1,
    caractérisée en ce que
    un conduit d'admission en dérivation et sous basse pression (69) communiquant avec le conduit répartiteur du gaz (1) débouche directement dans le conduit de liaison (11) sur son côté basse pression en amont du premier compresseur augmentant la pression (12).

10. Installation de stockage à réservoirs accumulateurs de gaz pur à passage en transit suivant la revendication 8 ou 9,
    caractérisée en ce que
    le conduit en dérivation (64, 69) est muni d'une vanne de régulation (67, 70) qui peut être télécommandée.

11. Installation de stockage à réservoirs accumulateurs de gaz pur à passage en transit suivant la revendication 1,
    caractérisée en ce que
    dans le conduit de liaison sont montés en série plusieurs compresseurs augmentant la pression (12, 13).

12. Installation de stockage à réservoirs accumulateurs de gaz pur à passage en transit suivant la revendication 8 ou 11,
    caractérisée en ce que
    en aval de chaque compresseur augmentant la pression (12, 13, 63) est monté un échangeur de chaleur (14, 15, 68) pour diminuer la température de stockage.

13. Installation de stockage à réservoirs accumulateurs de gaz pur à passage en transit suivant la revendication 1,
    caractérisée en ce que
    un échangeur de chaleur (31, 32) est monté, pour diminuer la température de stockage, dans le conduit d'admission (17, 18) menant du conduit répartiteur du gaz (1) au réservoir accumulateur basse pression (7, 8).

14. Installation de stockage à réservoirs accumulateurs de gaz pur à passage en transit suivant la revendication 1,
    caractérisée en ce que
    un échangeur de chaleur (29, 30) est monté, pour diminuer la température de stockage, dans le réservoir accumulateur basse pression (7, 8).

15. Installation de stockage à réservoirs accumulateurs de gaz pur à passage en transit suivant la revendication 1, 8 ou 9,
    caractérisée en ce que
    dans les conduits de dérivation et d'admission sont montés des échangeurs de chaleur (68, 73).

16. Installation de stockage à réservoirs accumulateurs de gaz pur à passage en transit suivant la revendication 10,
    caractérisée en ce que
    la vanne de régulation (70) du conduit en dérivation et d'admission basse pression (69) est verrouillée par rapport à l'une des vannes d'admission des conduits d'admission (17, 18) menant aux réservoirs accumulateurs basse pression (7, 8).